# EUROPEAN PATENT APPLICATION

(11) **EP 1 944 603 A1**
(43) Date of publication of application: **16.07.2008**
(21) Application number: 06811122.8
(22) Date of filing: 03.10.2006
(51) Int. Cl.: G01N 27/62, G01N 27/64

(54) **SUPPORT FOR ANALYSIS AND USE THEREOF**

(30) Priority: 13.10.2005 JP 2005299195
(71) Applicant: IBIDEN CO., LTD., Gifu 503-8604 (JP)
(72) Inventor: ANAHARA, Seijiro, Nagoya-shi, Aichi 4600011 (JP); MORIYAMA, Akihiko, Aichi-gun, Aichi 4801123 (JP)
(74) Representative: HOFFMANN EITLE
(86) International application number: PCT/JP2006/319774
(87) International publication number: WO 2007/043393

(57) **Abstract**

A carrier that is intended for retaining a subject of analysis and contains an electrically conductive material having a nonmetallic matrix. This analytical carrier containing an electrically conductive material is useful in situations where operations of the carrier, such as applying voltage thereto, are necessary to feed, retain or analyze the subject of analysis. The analytical carrier according to the present invention can be used as, for example, an alternate or a part of a metal sample plate for MALDI-TOFMS or other mass spectrometric analyses.

## Description

### Technical Field

The present invention relates to an analytical carrier, a carrier retaining a subject of analysis, a method for mass spectrometry and a method for amino acid sequencing.

### Background Art

In the analysis of polymer compounds and organic compounds, such as proteins, peptides and polysaccharides, mass spectrometric analyses including laser desorption ionization (LDI), matrix-assisted laser desorption ionization (MALDI), and time-of-flight mass spectrometry (TOFMS) based on these techniques are useful tools. In these ionization methods, for example, in MALDI, a mixture of a matrix such as sinapic acid and a protein is usually placed on a sample slide, and this mixture is then irradiated with laser so that the protein is ionized. In such an ionizing step, a plate made of a metal, such as stainless steel, is used as a sample plate because of its electric conductivity required in the subsequent mass spectrometry step.

In another method actually used, molecules arranged in a two-dimensional array by electrophoresis or a printing technique such as ink jet printing are blotted on a liquid-permeable carrier, and this carrier is attached to a metal sample plate with an electrically conductive double-faced adhesive tape (e.g., Japanese Unexamined Patent Application Publication No. 2005-83784).

### Disclosure of Invention

In mass spectrometry, a subject of analysis is often chemically modified or exposed to other chemical treatment. However, a metal sample plate is not resistant to chemical modification, and thus it has been required that the subject of analysis is chemically modified alone before being placed on the metal sample plate. Furthermore, such a known carrier as described above has no electric conductivity in itself and thus is difficult to ionize even if it is attached on a metal sample plate. Moreover, so as to be attached to a metal sample plate, such a carrier should take the form of a thin film and thus is difficult to handle.

In response to this, an object of the present invention is to provide an analytical carrier that is suitable for ionization in LDI, MALDI, and other similar techniques. The present invention also provides a method for mass spectrometry that facilitates chemical modification and other chemical treatment of subjects of analysis. Furthermore, the present invention provides a method for analyzing proteins or peptides wherein chemical modification of these samples for sequencing can be easily performed.

The inventors made an extensive investigation to address the problems described above and found that the use of an electrically conductive material having a nonmetallic matrix as a solid-phase carrier for ionization solves one or more of the problems and completed the present invention. More specifically, the present invention provides the following means.

The inventors created the following means so as to solve one or more of the problems described above.

(1) An analytical carrier for retaining a subject of analysis, comprising an electrically conductive material having a nonmetallic matrix.
(2) The analytical carrier according to (1), wherein the electrically conductive material is an electrically conductive polymer material.
(3) The analytical carrier according to (2), wherein the electrically conductive polymer material is an electrically conductive composite polymer material formed by dispersing an electrically conductive material in an organic polymer matrix.
(4) The analytical carrier according to (1), wherein the electrically conductive material is an electrically conductive ceramic material.
(5) The analytical carrier according to (4), wherein the electrically conductive ceramic material is a graphite material having a surface treated with glassy carbon or pyrolytic carbon.
(6) The analytical carrier according to any one of (1) to (5), wherein the analytical carrier has corrosion resistance to an acid selected from the group consisting of acetic acid, trifluoroacetic acid, and acetic anhydride.
(7) The analytical carrier according to any one of (1) to (6), wherein the analytical carrier is liquid-permeable or liquid-impermeable.
(8) The analytical carrier according to any one of (1) to (7), wherein the analytical carrier takes the form of a film, a plate, or a microtiter plate.
(9) The analytical carrier according to any one of (1) to (8), wherein the subject of analysis is one or more molecules selected from polynucleotides, oligonucleotides, proteins, peptides, glycoproteins, and polysaccharides, or a derivative thereof.
(10) The analytical carrier according to any one of (1) to (9), wherein the analytical carrier is a sample plate for mass spectrometry or a part thereof.
(11) The analytical carrier according to (10), wherein the analytical carrier is intended for matrix-assisted laser desorption ionization mass spectrometry.
(12) The analytical carrier according to (11), wherein the analytical carrier is intended for time-of-flight mass spectrometry.
(13) The analytical carrier according to any one of (1) to (12), wherein the analytical carrier has corrosion resistance in Edman degradation.
(14) The analytical carrier according to (13), wherein the analytical carrier retains a product or an intermediate product of Edman degradation or a similar reaction.
(15) The analytical carrier according to any one of (1) to (14), wherein the analytical carrier is intended for amino acid sequencing.
(16) An analytical carrier for retaining a subject of analysis, comprising an electrically conductive material having a nonmetallic matrix, wherein the analytical carrier has corrosion resistance in Edman degradation and is capable of retaining a by-product of Edman degradation.
(17) An analytical carrier retaining one or more subjects of analysis, comprising an electrically conductive polymer material dispersed in a nonmetallic matrix.
(18) The analytical carrier according to (17), further comprising a plurality of analytical areas arranged to retain the one or more subjects of analysis.
(19) The analytical carrier according to (18), wherein the analytical areas are each associated with specific positional information.
(20) The analytical carrier according to any one of (17) to (19), wherein each of the one or more subjects of analysis is an amino acid, a peptide, or a protein.
(21) The analytical carrier according to any one of (17) to (20), wherein the analytical areas retain proteins or peptides with different N-terminal amino acid residues.
(22) The analytical carrier according to any one of (17) to (21), wherein each of the analytical areas retains a product or an intermediate product of Edman degradation or a similar reaction.
(23) The analytical carrier according to any one of (17) to (22), wherein each of the one or more subjects of analysis is fed onto and retained on the analytical carrier by electrophoresis or liquid chromatography.
(24) A method for mass spectrometry, comprising a step of ionization based on laser desorption using a carrier, which is an electrically conductive material having a nonmetallic matrix, for retaining a subject of analysis.
(25) The method according to (24), wherein the step of ionization based on laser desorption is a step of matrix-assisted laser ionization.
(26) The method according to (24) or (25), further comprising a step of time-of-flight mass spectrometry.
(27) The method according to any one of (24) to (26), wherein the step of ionization is a step wherein the analytical carrier according to any one of (17) to (23) is used.
(28) A method for analyzing a protein or a peptide, comprising:
   (a) a step of feeding the protein or the peptide onto a carrier and retaining the protein or the peptide on the carrier that is an electrically conductive material having a nonmetallic matrix;
   (b) a step of chemically modifying a terminal amino acid residue of a part of the protein or the peptide retained on the carrier so as to remove the terminal amino acid residue; and
   (c) a step of mass spectrometry of a fragment obtained in the step (b), which has the terminal amino acid removed, and a part of the protein or the peptide that has been modified but not cleaved in the step (b) while both are retained on the carrier.
(29) The method according to (28), wherein the step (b) is carried out using Edman degradation or a similar reaction.
(30) The method according to (28) or (29), wherein the step (b) and the step (c) are alternately repeated as many times as needed for identification of an N-terminal amino acid residue of the protein or the peptide.
(31) The method according to any one of (28) to (30), wherein the protein or the peptide is separated by electrophoresis or liquid chromatography before being fed onto and retained on the carrier in the step (a).

### Best Mode for Carrying Out the Invention

The analytical carrier according to the present invention is characterized in that it is formed of an electrically conductive material having a nonmetallic matrix. In the present invention, this constitution using such an electrically conductive material makes the carrier useful in situations where operations of the carrier, such as applying voltage thereto, are necessary to feed, retain or analyze a sample. The analytical carrier according to the present invention can be used as, for example, an alternate or a part of a metal sample plate for MALDI-TOFMS or other mass spectrometric analyses.

Additionally, the analytical carrier according to the present invention is formed of an electrically conductive material having a nonmetallic matrix and thus can be improved with respect to corrosion resistance more easily than a metal carrier. This also makes it easy to initiate various chemical reactions for modifying a subject of analysis on the carrier. Thus, cumbersome procedures such as preliminary coating of a sample plate for mass spectrometry with a modified product are eliminated, and modification and analytical processes can be carried out on a single carrier.

The other embodiments of the present invention, i.e., a method for mass spectrometry and a method for analyzing proteins or peptides, are characterized in the analytical carrier according to the present invention or the use thereof, and each provide corresponding benefit.

Hereinafter, the analytical carrier according to the present invention is described, and the other embodiments of the present invention, i.e., a method for mass spectrometry and a method for analyzing peptides, are then described.

### (Analytical carrier)

The electrically conductive polymer material used in the analytical carrier according to the present invention (hereinafter, simply referred to as a carrier) may take any shape depending on the purpose of the analysis or other factors, and thus is not limited with respect to its shape. Examples of the shape thereof may include a bead, a plate like a substrate, a film, and a microtiter plate with one or more wells or other concave portions forming the areas to be analyzed and septal walls. A carrier to be used in a protein sequencer, for mass spectrometry or fluorometry, or other similar applications preferably takes the form of a plate, a film, a microtiter plate, or the like. It should be noted that a carrier taking the form of a plate described herein has sufficient rigidity for easy handling thereof as a whole, and it preferably has rigidity comparable to that of a known substrate. A carrier in the form of a plate can be used as a sample plate alone. Meanwhile, a carrier taking the form of a film described herein is too flexible to maintain its three-dimensional shape alone. Such a film-like carrier may be attached on the surface of a plate that has a nonmetallic matrix and is made of an electrically conductive material or the surface of an electrically conductive metal plate made of stainless steel, aluminum, titanium, or the like. In addition, a film is preferably attached to a sample plate by its inherent adhesive properties; however, a tape material or an adhesive agent containing an electrically conductive material may be used.

Additionally, the carrier may be liquid-permeable by having pores or liquid-impermeable by being dense or having liquid repellency, but preferably is liquid-impermeable. The liquid permeability allows the carrier to incorporate a subject of analysis, and this often reduces ionization efficiency and leads to precision drop in mass spectrometry. More preferably, the carrier is made of a dense material for liquid impermeability.

Electric conductivity of the carrier is not particularly limited. For example, a carrier for TOFMS may have a volume resistance (Ω·cm) in the direction of thickness in the range of 2 to 10000. Such a volume resistance can be measured by, for example, JIS K7194.

In addition, a carrier that is made of an electrically conductive material and has a nonmetallic matrix can be used as a sample plate alone for mass spectrometric analyses, in particular, for LDI-TOFMS or MALDI-TOFMS. Such a carrier does not inhibit the ionization step of MALDI and thus it can be said that an electrically conductive material is a suitable carrier for MALDI.

Furthermore, the carrier preferably has corrosion resistance. Examples of acids to which the carrier preferably has corrosion resistance may include inorganic acids such as sulfuric acid, hydrochloric acid, and nitric acid; acetic acid; halogenated organic acids such as trifluoroacetic acid; and organic acids such as organic sulfonic acid. Considering that the carrier is used in the analysis of proteins and peptides, it is particularly preferable that the carrier has corrosion resistance to organic acids commonly used to modify proteins and peptides. Typical examples of such acids include acetic acid, halogenated organic acids such as trifluoroacetic acid, and organic acid anhydrides such as acetic anhydride, which are each used to remove N-terminal amino acids in Edman degradation, and it is preferable that the carrier has resistance to these acids. Preferably, the carrier also has resistance to methanol, acetonitrile and other similar compounds.

Examples of an electrically conductive material having a nonmetallic matrix may include an electrically conductive polymer material. Such a polymer material may be a plastic material that inherently has electric conductivity, such as polyacetylene with or without substituents, diacetylene polymer, polypyrrole with or without substituents, polythiophene with or without substituents and polyaniline; or a electrically conductive composite polymer material formed by dispersing an electrically conductive material including particles or fibers of a metal, carbon black, or graphite in a plastic material, a silicone material or other polymer materials. In the present invention, polyvinyl chloride, polycarbonate, polypropylene or the like is preferably used to provide the carrier with corrosion resistance.

An electrically conductive polymer material may have a functional group that is effective in retaining a subject of analysis. Such a functional group may be originally contained in each of monomers that constitute the polymer material to be synthesized, or added to the surface of the carrier by modification after the synthesis.
Examples of such a functional group may include amino, carboxy, epoxy, formyl, hydroxy, carbodiimide, and active ester groups. Examples of a functional group suitably used to retain nucleic acids such as DNA and RNA may include N-hydroxysuccinimide, carbodiimide, epoxy, and formyl groups, whereas examples of a functional group suitably used to retain peptides may include N-hydroxysuccinimide, carbodiimide, epoxy, and formyl groups, as well as metal chelates.

Examples of other electrically conductive materials may include electrically conductive ceramic materials, such as silicon carbide (SiC), graphite, and other non-oxide ceramics. Additionally, electrically conductive composite ceramic materials formed by mixing particles of a metal or an electrically conductive ceramic material with a matrix made of an insulating ceramic are also included in these examples.

A preferred electrically conductive ceramic material is graphite, in particular, graphite having the surface treated with glassy carbon or pyrolytic carbon. A sample plate made of such graphite would suppress detachment of graphite from itself and be excellent in electric conductivity, resistance to solvent and durability to withstand repeated use. In particular, graphite having the surface treated with pyrolytic carbon is more preferable because of its improved performance in suppressing detachment of carbon particles, excellent resistance to acetonitrile and other solvents, resistance to acids and bases, mechanical strength, durability to withstand repeated use, and other favorable characteristics. A graphite material having such a treated surface can constitute a sample plate suitable for MALDI without being attached to a metal plate.

Graphite having the surface and the inner portion impregnated with glassy carbon can be preferably used as graphite having the surface treated with glassy carbon. The impregnation depth is preferably, for example, 1 mm or more, and more preferably 10 mm or less. Such a graphite material is available as, for example, VGI (a graphite product manufactured by IBIDEN Co., Ltd.). Meanwhile, graphite with a coating layer formed by chemical vapor deposition of carbon can be used as graphite having the surface treated with pyrolytic carbon. This graphite is preferably isotropic graphite. Such a graphite material is available as, for example, Pyrocarb (a graphite product manufactured by IBIDEN Co., Ltd.).

Such a carrier has necessary corrosion resistance and thus can be used in reactions for preparing or modifying a subject of analysis, such as Edman degradation on itself, and at the same time, has the property of retaining a protein, a peptide, an amino acid, and a derivative thereof via a noncovalent bond. Thus, the carrier according to the present invention can be used as a stage on which a protein, an amino acid or a derivative thereof formed thereon is placed, and also used in mass spectrometric analyses while retaining the placed compound. As a result, the carrier according to the present invention can be used as a carrier for mass spectrometry using LDI or MALDI and also as a carrier for chemical modification of proteins or peptides including an analytical carrier for an amino acid sequencer based on Edman degradation or other similar reactions.

This property also allows the carrier to be used as a stage on which Edman degradation or other chemical reactions is performed and the reaction product is retained, and then used as a carrier for mass spectrometry, in particular, a sample plate or a part thereof for mass spectrometry in which voltage is applied to the sample plate. This means the possibility of using a single carrier for both chemical reactions, such as the synthesis, extraction, and modification of a subject of analysis, and subsequent mass spectrometry without transferring the subject of analysis to a sample plate for mass spectrometry. Therefore, the use of the carrier according to the present invention in the way described above eliminates the necessity of transferring a reaction product to a metal sample plate after several reactions of a subject of mass spectrometry and the necessity of attaching a film retaining a reaction product to a metal sample plate as well.

### (Subject of analysis)

The subject of analysis, which is retained on the carrier, is not particularly limited, and examples thereof may include polynucleotides such as DNA, RNA, DNA/RNA chimeras, and DNA/RNA hybrids, oligonucleotides, peptides, proteins, polysaccharides, glycoproteins, lipids, and PNA (peptide nucleic acids). Such a biopolymer may be derivatized for analysis by chemical modification. Besides biopolymers, natural and synthesized organic compounds are also included in the examples of the subject of analysis. These subjects of analysis are found in cells, bacterial extract, fermentation products, extract of cell-free systems, PCR products, artificially synthesized compounds, enzyme-treated proteins, or the like. Additionally, in the present invention, since the carrier according to the present invention is suitable for mass spectrometry, the subject of analysis is preferably a compound that can be used or is suitably used in mass spectrometry, in particular, mass spectrometry based on MALDI.

### (Method of analysis)

The method of analysis according to the present invention uses a carrier retaining a subject of analysis. More specifically, in this method, a carrier retaining a subject of analysis is first fabricated, and then this carrier is analyzed in several analytical techniques to provide analytical results. Hereinafter, the carrier retaining a subject of analysis and the fabrication process thereof are first described.

### (Carrier retaining a subject of analysis)

Retaining a subject of analysis on the carrier is defined as that the subject of analysis is retained in a fixed position on the carrier at least until the time of the analysis. Thus, even a subject of analysis that is weakly fixed to a carrier so that it can be easily removed therefrom after the analysis by washing or other means can be considered as retained on the carrier. The way of retaining a subject of analysis is not particularly limited, and examples thereof may include noncovalent bonds such as ionic bonds, hydrogen bonds, electrostatic interactions, hydrophobic interactions, and chelate bonds, as well as covalent bonds. In addition, the way of retaining a subject of analysis does not always have to be such chemical bonds. Even if the subject of analysis simply exists in a concave portion formed on the surface of the carrier, this subject of analysis can be considered as retained on the carrier as long as it is fixed in the concave portion until the time of the analysis. The way of retaining a subject of analysis may vary depending on the kind of the subject, and the material, surface modification, and other characteristics of the carrier; to ensure the ionization efficiency in mass spectrometry, however, it is preferably based on noncovalent bonds.

The subject of analysis may be directly retained on the surface of a carrier or indirectly attached via an inclusion directly fixed on the surface of the carrier or by other means. In a possible way of retaining a subject of analysis on a carrier, an antibody (an antigen) is first attached to a carrier, and then the carrier and an antigen (an antibody) as the subject of analysis fed thereonto initiate the antigen-antibody reaction so that the subject is retained on the carrier as an antigen-antibody complex. Additionally, a subject of analysis that can be hybridized, such as oligonucleotides and nucleic acids, may be retained on a carrier by hybridization based on hydrogen bonds between complementary bases of nucleotide chains. In this method, a nucleic acid or other compounds with a predetermined nucleotide sequence is attached to the carrier in advance. Besides the specific interactions between an antigen and an antibody, interactions including receptor-ligand interactions, hybridization, protein-protein interactions, and protein-nucleic acid interactions, as well as hydrogen bonds, hydrophilic interactions, hydrophobic interactions, electrostatic interactions, and chelate bonds between a subject of analysis and an inclusion that is attached to a carrier in advance may be used to retain a subject of analysis on a carrier.

Furthermore, the subject of analysis may be chemically modified as needed. The kind of chemical modification is not particularly limited. For example, when a protein is analyzed, the product of Edman degradation of the protein may be retained on the carrier as a subject of analysis, as described later.

An area (e.g., a spot) on a carrier retaining the group of one or more subjects of analysis contains the subjects of analysis and thus can constitute an analytical cell as it is. In other words, a carrier may have one or more analytical cells each containing one or more subjects of analysis. It should be noted that the cell means an area that contains one or more subjects of analysis and is supposed to be measured in the analysis.

When the carrier has two or more of analytical cells, these analytical cells are preferably arranged in an array and, more preferably, each associated with specific positional information. In other words, the position of each of the analytical cells on the carrier is preferably predetermined. Associating analytical cells with specific positional information to predetermine the positions thereof would facilitate the analytical step and the subsequent data processing step, thereby reducing the time required for the analysis with many analytical cells being present on the carrier. For example, in mass spectrometry based on MALDI, analytical cells arranged on a carrier are serially irradiated with laser so that subjects of analysis contained in the cells are desorbed and ionized, and as a result, the analytical cells are easily and rapidly analyzed even if the number thereof is large.

### (Fabrication of a carrier retaining a subject of analysis)

To fix a subject of analysis directly to a carrier, the subject of analysis should be first fed onto the carrier. The subject of analysis may be synthesized on the carrier or fed thereonto after the synthesis. Examples of the synthesis of a subject of analysis directly on a carrier may include the synthesis of a protein in a cell-free protein-synthesizing system and the synthesis of an oligonucleotide performed on a carrier. Examples of the method for feeding a subject of analysis onto a carrier may include those using ink jet or pins.

Another possible way to feed a subject of analysis onto a carrier is the separation of a mixture containing the subject of analysis by electrophoresis, chromatography, or the like. In particular, a method in which components separated in electrophoresis or chromatography are fed onto a carrier based on the separation pattern is preferable. In this way, the subjects of analysis separated in several separation methods can be individually analyzed according to the separation patterns. More specifically, electrophoretic patterns can be directly transcribed on a carrier by blotting. A carrier used in this method is preferably liquid-permeable. Also, in liquid chromatography, eluents each having a predetermined volume may be dropped on a carrier in such a manner that dots or streams of the eluents are made. This enables several eluted fractions being retained on a carrier according to the chromatographic separation pattern thereof.

In addition, when the subject of analysis is polymer compounds such as a peptide, a protein or other polymers, the subject may be fragmented into low-molecular-weight molecules with a catabolic enzyme as needed before being fed onto a carrier, considering the molecular weight range that mass spectrometry supports and the information obtained in mass spectrometry. For example, a protein can be treated with a protease, such as trypsin. This enables the analysis of fragmentation patterns, improves the precision of mass spectrometry, and facilitates the identification and sequencing of proteins. In addition, protein fragments formed in this way are preferably separated by electrophoresis or liquid chromatography before being fed onto a carrier.

Meanwhile, examples of an electrophoretic method used herein may include agarose gel electrophoresis, denaturing agarose gel electrophoresis, polyacrylamide gel electrophoresis, SDS-polyacrylamide gel electrophoresis, isoelectric focusing, and two-dimensional gel electrophoresis. As a liquid-chromatographic method, liquid chromatography using a micro- or nano-capillary is preferably used.

After being fed onto a carrier, the subject of analysis is retained on the carrier. The easiest way to fix the subject of analysis on a carrier is the evaporation of medium used to feed the subject of analysis, such as water, to dryness. To fix a subject of analysis via covalent bonds with the carrier or functional groups existing on the surface of the carrier, a required reagent may be fed onto the carrier together with or separately from the subject of analysis so as to react with the subject of analysis. The conditions of this system are appropriately controlled depending on the way of fixation.

The subject of analysis may be chemically modified on a carrier after being fed onto or retained on the carrier. Thus, the subject of analysis can also be called a precursor of the subject of analysis until the time of chemical modification. The kind and method of modification are not particularly limited. For example, a protein, a peptide or the like may be chemically modified by the reaction with 1-fluoro-2,4-dinitrobenzene (FNDB) or 5-dimethylaminonaphthalene-1-sulfonyl chloride (dansyl chloride) or by Edman degradation using Edman reagent (phenylisothiocyanate) and an acid anhydride.

Products and intermediate products of Edman degradation or other similar reactions are also included in subjects of analysis in the present invention. For example, after a modified method of Edman degradation, the N-terminal amino acid sequence of a protein or other similar compounds can be determined by what is called ladder sequencing. In this method, the reaction for removing the N-terminal amino acid residue that occurs because of the presence of fluoroacetic acid added is suppressed by changing a group that modifies the N-terminal amino acid residue via coupling reaction using the mixture of phanyl isothiocyanate (PITC) and a few percent of any one of isocyanate (ITC), fluorescein isothiocyanate (FITC), methyl isothiocyanate (MITC) and others, or by adjusting the time of the removing reaction. As a result, the following products predominantly remain on analytical areas of the carrier: (1) the derivative of the N-terminal amino acid residue, which is a product of this degradation reaction; (2) the fragment without the N-terminal amino acid residue, which is the other product of the reaction (the by-product of Edman degradation); and (3) the whole modified protein or peptide, which has been coupled but not cleaved (the coupled body).

Here, (2) is the by-product of Edman degradation or other similar reactions, whereas (3) is the intermediate product thereof.

Among the three kinds of substances described above, (2) and (3) are identical to each other except for the presence or absence of the N-terminal amino acid residue. Thus, in mass spectrometry, the kind of this N-terminal amino acid residue can be identified based on the mass difference between these fragments obtained by measuring and comparing the masses thereof. Furthermore, repeating such reaction and mass spectrometry steps as needed yields the amino acid sequence of the N-terminal.

Consequently, typical embodiments of procedures to fix a peptide or a protein on a carrier and of such a carrier can be described as follows: a protein is degraded with a protease such as trypsin; the obtained fragments are separated by liquid chromatography using a micro- or nano-capillary; the eluents are dropped on a carrier in such a manner that many spots are arranged in an array and then dried; each of the spots is subjected to reaction according to the modified method of Edman degradation described above; and the spots are washed and dried. These procedures yield a carrier that retains one or more fragments obtained by the trypsin degradation of the protein in one or more eluent spots (analytical cells) distributed according to the separation pattern of liquid chromatography. Furthermore, as a result of using the modified method of Edman degradation, the fragment as the by-product of Edman degradation, which is a peptide or a protein without its N-terminal amino acid, and the coupled body, which has been coupled with the coupling agent but not cleaved, are retained in each of the eluent spots on the carrier.

Meanwhile, to attach a subject of analysis indirectly to a carrier, a carrier that retains an inclusion as the bridge between the subject of analysis and the carrier should be first prepared. Examples of such an inclusion may include a protein and a nucleic acid, as described earlier. To feed such an inclusion onto a carrier and fix it on the carrier, the methods described above may be appropriately used. To attach a subject of analysis to a carrier via such an inclusion, a sample containing the subject of analysis is fed onto a carrier retaining the inclusion so that the intended interactions occur to bond the two substances with each other.

### (Analytical process)

The carrier retaining a subject of analysis is subjected to an analytical process. Such an analytical process preferably involves mass spectrometry. The method for ionization in mass spectrometry is preferably, but not particularly limited to, laser desorption ionization (LDI) without using a matrix or matrix-assisted laser desorption ionization (MALDI), in which a carrier can be used therein as it is. MALDI is preferably used especially in the analyses of peptides and proteins.

Examples of laser used in MALDI may include N2, Nd-YAG, CWCO, TEA-CO2, and argon laser. The matrix used in MALDI is not particularly limited, but examples thereof may include nicotinic acid, 2-pyrazinecarboxylic acid, sinapic acid, 2,5-dihydroxybenzoic acid, 5-methoxysalicylic acid, α-cyano-4-hydroxycinnamic acid, 3-hydroxypicolinic acid, diaminonaphthalene, 2-(4-hydroxyphenylazo)benzoic acid, dithranol, succinic acid, 5-(trifluoromethyl)uracil, and glycerin. The conditions of the matrix, such as the amount thereof relative to a subject of analysis, are not particularly limited and may be appropriately chosen without departing from known ranges thereof.

In mass spectrometry performed in the method for mass spectrometry according to the present invention, several spectrometers including those based on magnetic field polarization, quadrupoles, an ion trap detector, time-of-flight, or Fourier transform ion cyclone, as well as a tandem mass spectrometer may be used. In particular, in mass spectrometry based on LDI or MALDI, a time-of-flight mass spectrometer is preferable.

The mass of one or more subjects of analysis existing in the analytical cell(s) formed on a carrier can be measured during the step of mass spectrometry. For example, when the products of Edman degradation exist in an analytical cell, more specifically, when the derivative of the terminal amino acid residue (ATZ or PTH derivative), which is the product of Edman degradation; the remaining fragment, which is the by-product of Edman degradation; and the whole modified protein or peptide, which has been coupled at its N-terminal with an isocyanate-based coupling agent but not cleaved exist, the use of LDI or MALDI facilitates measuring the molecular weights of the remaining fragment, which is the by-product of Edman degradation, and the uncut substance, thereby enabling the identification of the N-terminal amino acid residue in addition to the original molecular weight.

Besides mass spectrometry, several analytical techniques may be used in such an analytical process. In addition, when a subject of analysis is labeled with a fluorescent substance, a light-emitting substance or the like, the method of detecting fluorescence or a color generated on a carrier by such a substance may be used.

### Examples

The present invention is described in detail below with reference to examples, but not limited to these examples.

### (Example 1)

Two films (each manufactured by Mitsubishi Plastics, Inc.), an electrically conductive plastic film with corrosion resistance (thickness: 80 µm) and an electrically conductive silicone rubber film (thickness: 150 µm), were prepared. The physical properties of these films are shown in the following table.

**[Table 1]**

| Parameter | | Electrically conductive plastic with corrosion resistance | Electrically conductive silicone rubber |
|---|---|---|---|
| Thickness(µm) | | 80 | 150 |
| Resistance in the direction of thickness | Resistance(mΩ) | 20 | 14.0 |
| | Volume resistance (Ω·cm) | 1.6 | 6.0 |
| Resistance in the direction of the surface | Volume resistance (Ω·cm) | 0.3 | 10.0 |
| | Surface resistance (Ω/sq) | 60 | 440 |
| Specific gravity | | 0.98 | 1.3 |
| Hardness | | 90 | 70 |

| | | | |
|---|---|---|---|
| Resistance in the direction of thickness: 1.89MPa load; Volume resistance: Resistance ×Area of a measuring electrode/Thickness of the film | | | |

The electrically conductive plastic film was cut into samples each having the same size as the metal sample plate of a MALDI-TOF mass spectrometer (ABI Voyager DE Pro MALDI-TOF mass spectrometer), and the samples were each coated with 0.5 pmol of angiotensin (MW: 1293), attached to the metal sample plate without using an adhesive agent, and then subjected to mass spectrometry with the laser intensities of 1100, 1000, 700 and 600. Sinapic acid was used as the matrix. With any of the laser intensities, an ion having a molecular weight of 1294 was detected. The detected ion was the most stable when the laser intensity was 1000.

On the other hand, the electrically conductive silicone rubber film was also cut into samples each having the same size as the metal sample plate. The samples were each coated with angiositesin, the concentrations used of which were 0.5 pmol, 0.25 pmol, 50 fmol, 10 fmol, 1 fmol, and 0.5 fmol, and attached to the metal sample plate without using an adhesive agent, and then subjected to mass spectrometry with the MALDI-TOF mass spectrometer in which sinapic acid was used as the matrix and the laser intensity was 1000. With any of the concentrations of the sample, an ion having a molecular weight of 1294 was detected; however, the detected ion was stable when the concentration was 50 fmol or higher.

### (Example 2)

In this example, an electrically conductive polyvinyl chloride plate (containing electrically conductive carbon) (TND CV930 manufactured by TAKIRON Co., Ltd.) (thickness: 1.5 mm; volume resistance in the direction of thickness (Ω·m) (JIS K7194): 104; Rockwell hardness (JIS K7112): 88; specific gravity (JIS K7202): 1.35) was cut into samples each having the same size as the metal sample plate of a MALDI-TOF mass spectrometer (ABI Voyager DE Pro MALDI-TOF mass spectrometer). The samples were each coated with angiotensin (MW: 1293), the concentrations used of which were 1 pmol, 100 fmol, and 10 fmol, or Dynorphin, the concentrations used of which were 1 pmol, 100 fmol, and 10 fmol, and then subjected to mass spectrometry in which sinapic acid was used as the matrix and the laser intensity was 1000. With all combinations of the proteins and concentrations thereof excluding 10 fmol of angiotensin, an ion having the molecular weight of the corresponding protein was detected; however, the detected ion was the most stable when the concentration of angiotensin or Dynorphin was 1 pmol.

### (Example 3)

In this example, a silicon carbide (SiC) plate was used as the sample plate. More specifically, this ceramic plate was cut into a sample having the same size as the metal sample plate of a MALDI-TOF mass spectrometer (ABI Voyager DE-STR MALDI-TOF mass spectrometer). The sample was coated with 1 pmol of angiotensin (MW: 1293), and this sample plate and the metal sample plate were subjected to mass spectrometry in which α-cyano-4-hydroxycinnamic acid was used as the matrix and the laser intensity was 2142. The use of the SiC plate favorably reduced background noise, so that an ion having the molecular weight of angiotensin was detected.

### (Example 4)

In this example, a VGI plate and a Pyrocarb plate (each manufactured by IBIDEN Co., Ltd.) were used as the sample plates. More specifically, these graphite plates were cut into samples each having the same size as the metal sample plate of a MALDI-TOF mass spectrometer (ABI Voyager DE-STR MALDI-TOF mass spectrometer). The samples were each coated with 1 µL of angiotensin (MW: 1293) solution containing angiotensin at a concentration of 0.5 pmol/µL, and the sample plates were subjected to mass spectrometry in which α-cyano-4-hydroxycinnamic acid was used as the matrix and the laser intensity was 2044 for the VGI plate and 2010 for the Pyrocarb plate. With any of the plates, an ion having the molecular weight of angiotensin was detected and background noise was favorable.

### (Example 5)

In this example, Edman degradation was carried out on an electrically conductive plastic film the same as that used in Example 1, and then the obtained amino acid were sequenced. The electrically conductive plastic film retaining 200 pmol of lysozyme spotted was used as a sample carrier for a peptide sequencer (ABI 491 CLC peptide sequencer). An attempt to analyze four residues showed that such analysis could be successfully performed. Consequently, the electrically conductive plastic film used in Example 1 proved to have sufficient corrosion resistance to Edman reagent used in Edman degradation, acid anhydrides such as trifluoroacetic anhydride, and other similar compounds, as well as to have the capacity of retaining proteins sufficient to withstand washing and other treatments.

Furthermore, the same kind of an electrically conductive plastic film retaining 10 pmol of andiositesin spotted was also used as a sample carrier. An attempt to analyze five residues in the same way as described above showed that such analysis could also be successfully performed. Consequently, the electrically conductive plastic film used in Example 1 proved to have the sufficient capacity of retaining peptides with relatively low molecular weights as well.

This application claims priority from Japanese Patent Application No. 2005-299195 filed October 13, 2005, which is hereby incorporated by reference herein in its entirety.

### Industrial Applicability

The present invention is applicable to applications in analytical chemistry, such as a protein sequencer, mass spectrometry, and fluorometry.

## Claims

1. An analytical carrier for retaining a subject of analysis, comprising an electrically conductive material having a nonmetallic matrix.

2. The analytical carrier according to Claim 1, wherein the electrically conductive material is an electrically conductive polymer material.

3. The analytical carrier according to Claim 2, wherein the electrically conductive polymer material is an electrically conductive composite polymer material formed by dispersing an electrically conductive material in an organic polymer matrix.

4. The analytical carrier according to Claim 1, wherein the electrically conductive material is an electrically conductive ceramic material.

5. The analytical carrier according to Claim 4, wherein the electrically conductive ceramic material is a graphite material having a surface treated with glassy carbon or pyrolytic carbon.

6. The analytical carrier according to any one of Claims 1 to 5, wherein the analytical carrier has corrosion resistance to an acid selected from the group consisting of acetic acid, trifluoroacetic acid, and acetic anhydride.

7. The analytical carrier according to any one of Claims 1 to 6, wherein the analytical carrier is liquid-permeable or liquid-impermeable.

8. The analytical carrier according to any one of Claims 1 to 7, wherein the analytical carrier takes the form of a film, a plate, or a microtiter plate.

9. The analytical carrier according to any one of Claims 1 to 8, wherein the subject of analysis is one or more molecules selected from polynucleotides, oligonucleotides, proteins, peptides, glycoproteins, and polysaccharides, or a derivative thereof.

10. The analytical carrier according to any one of Claims 1 to 9, wherein the analytical carrier is a sample plate for mass spectrometry or a part thereof.

11. The analytical carrier according to Claim 10, wherein the analytical carrier is intended for matrix-assisted laser desorption ionization mass spectrometry.

12. The analytical carrier according to Claim 11, wherein the analytical carrier is intended for time-of-flight mass spectrometry.

13. The analytical carrier according to any one of Claims 1 to 12, wherein the analytical carrier has corrosion resistance in Edman degradation.

14. The analytical carrier according to Claim 13, wherein the analytical carrier retains a product or an intermediate product of Edman degradation or a similar reaction.

15. The analytical carrier according to any one of Claims 1 to 14, wherein the analytical carrier is intended for amino acid sequencing.

16. An analytical carrier for retaining a subject of analysis, comprising an electrically conductive material having a nonmetallic matrix, wherein the analytical carrier has corrosion resistance in Edman degradation and is capable of retaining a by-product of Edman degradation.

17. An analytical carrier retaining one or more subjects of analysis, comprising an electrically conductive polymer material dispersed in a nonmetallic matrix.

18. The analytical carrier according to Claim 17, further comprising a plurality of analytical areas arranged to retain the one or more subjects of analysis.

19. The analytical carrier according to Claim 18, wherein the analytical areas are each associated with specific positional information.

20. The analytical carrier according to any one of Claims 17 to 19, wherein each of the one or more subjects of analysis is an amino acid, a peptide, or a protein.

21. The analytical carrier according to any one of Claims 17 to 20, wherein the analytical areas retain proteins or peptides with different N-terminal amino acid residues.

22. The analytical carrier according to any one of Claims 17 to 21, wherein each of the analytical areas retains a product or an intermediate product of Edman degradation or a similar reaction.

23. The analytical carrier according to any one of Claims 17 to 22, wherein each of the one or more subjects of analysis is fed onto and retained on the analytical carrier by electrophoresis or liquid chromatography.

24. A method for mass spectrometry, comprising a step of ionization based on laser desorption using a carrier, which is an electrically conductive material having a nonmetallic matrix, for retaining a subject of analysis.

25. The method according to Claim 24, wherein the step of ionization based on laser desorption is a step of matrix-assisted laser ionization.

26. The method according to Claim 24 or 25, further comprising a step of time-of-flight mass spectrometry.

27. The method according to any one of Claims 24 to 26, wherein the step of ionization is a step wherein the analytical carrier according to any one of Claims 17 to 23 is used.

28. A method for analyzing a protein or a peptide, comprising:
(a) a step of feeding the protein or the peptide onto a carrier and retaining the protein or the peptide on the carrier that is an electrically conductive material having a nonmetallic matrix;
(b) a step of chemically modifying a terminal amino acid residue of a part of the protein or the peptide retained on the carrier so as to remove the terminal amino acid residue; and
(c) a step of mass spectrometry of a fragment obtained in the step (b), which has the terminal amino acid removed, and a part of the protein or the peptide that has been modified but not cleaved in the step (b) while both are retained on the carrier.

29. The method according to Claim 28, wherein the step (b) is carried out using Edman degradation or a similar reaction.

30. The method according to Claim 28 or 29, wherein the step (b) and the step (c) are alternately repeated as many times as needed for identification of an N-terminal amino acid residue of the protein or the peptide.

31. The method according to any one of Claims 28 to 30, wherein the protein or the peptide is separated by electrophoresis or liquid chromatography before being fed onto and retained on the carrier in the step (a).
